# EUROPÄISCHE PATENTSCHRIFT

(11) **EP 1 104 331 B1**
(45) Veröffentlichungstag und Bekanntmachung des Hinweises auf die Patenterteilung: **14.05.2003**
(21) Anmeldenummer: 99936537.2
(22) Anmeldetag: 15.07.1999
(51) Int. Cl.: B01D 29/41, B01D 25/26

(54) **FILTERMODUL**
FILTER MODULE
MODULE FILTRANT

(30) Priorität: 17.08.1998 DE 19837257
(43) Veröffentlichungstag der Anmeldung: 06.06.2001
(73) Patentinhaber: SEITZSCHENK FILTERSYSTEMS GmbH, 55543 Bad Kreuznach (DE)
(72) Erfinder: STROHM, Gerhard, D-55278 Dexheim (DE); SCHNIEDER, Georg, D-55545 Bad Kreuznach (DE)
(74) Vertreter: Fuchs Mehler Weiss & Fritzsche
(86) Internationale Anmeldenummer: EP9905011
(87) Internationale Veröffentlichungsnummer: WO00010684

(56) Entgegenhaltungen:
- EP-A- 0 291 883
- WO-A-98/35741
- DE-A- 3 239 687
- DE-A- 3 741 552
- DE-C- 944 065
- US-A- 1 446 187
- US-A- 2 079 365
- US-A- 3 294 241

## Beschreibung

Die Erfindung betrifft ein Filtermodul mit Lagen aus einem Filtermedium, zwischen denen drainierende Abstandselemente angeordnet sind, wobei die Unfiltrat führenden Abstandselemente gegenüber dem Filtratraum abgedichtet sind.

Solche Filtermodule sind in vielfältigen Bauformen bekannt, wobei der Mehrheit dieser Filtermodule gemeinsam ist, daß die Filterlagen aus ebenen Materialien, wie z.B. Filterkartons, Papieren, Vliesen oder Geweben hergestellt sind.

Aus der US 4,347,208 ist ein Filtermodul aus Filterzellen bekannt, deren Kern aus einem drainierenden Spacer (innerer Spacer) aus Kunststoff besteht, auf dem beidseitig eine Filterlage aus Filtermedium in Form von flachen Scheiben aufliegt. Im Zentrum der Filterzelle ist eine Filtratöffnung vorgesehen. Derartige Filterzellen müssen zur Abdichtung am äußeren Rand mit einem Kunststoffmaterial umspritzt werden, was aufwendig und kostspielig ist, weil hierfür spezielle Formen verwendet werden müssen, die an die Geometrie der Filterzelle angepaßt sein müssen. Die Abdichtung der Filterzelle gegenüber dem Unfiltratraum erfolgt durch Zusammenpressen der beiden, nur im Randbereich aufeinanderliegenden Filtermateriallagen und Ausbilden eines U-förmigen, den Randbereich umgreifenden Kunststoffelementes.

Ähnliche Filtermodule sind aus der EP 0 285 031 B1, US 2,088,199, US 3,666,107 und EP 0 327 394 A2 bekannt, wobei teilweise zusätzlich noch Stützrohre Verwendung finden, an denen die Filterzellen angeordnet und gehalten sind.

In der EP 0 233 999 wird ebenfalls ein solches Filtermodul beschrieben, bei dem zwischen den Filterzellen zusätzlich sogenannte äußere Spacer angeordnet sind, die die Filterzellen auf Abstand halten, um eine Beschädigung, Kollabierung oder Aufquellen der Filterzellen zu vermeiden. Außerdem soll der radiale Fluß zwischen den Filterzellen verbessert werden. Die inneren und äußeren Spacer sind unterschiedlich ausgestaltet, so daß zur Herstellung verschiedene Werkzeuge benötigt werden. Auch bei diesem Filtermodul werden umspritzte Filterzellen benutzt.

Stufenfilter können mit diesen bekannten Filteranordnungen nicht hergestellt werden.

Die EP 0 291 883 A1 zeigt einen Schichtaufbau aus Filterschichten und drainierenden Schichten, wobei drainierende Schichten nur für den Ablauf des Filtrats verwendet werden. Für den Zulauf des Unfiltrats sind Zwischenräume zwischen den Filterschichten vorgesehen. Die wechselseitige Abdichtung erfolgt mit Dichtungselementen, die Abstandshalter aufweisen, so daß das Filtermodul ohne Stützrohr auskommt.

Gattungsbildende Filtermodule sind Gegenstand der Patentschriften DE 944 065 C sowie der US 1,446,187 A.

Aufgabe der Erfindung ist es, gattungsbildende Filtermodule bezüglich ihres Aufbaus zu vereinfachen, wobei auch die Herstellung eines Stufenfilters möglich sein soll.

Diese Aufgabe wird mit einem Filtermodul gelöst, bei dem die drainierenden Schichten am jeweils anderen Übergang zum Unfiltrat-/Filtratraum Durchflußelemente aufweisen, und daß die Dichtelemente und/oder die Durchflußelemente Mittel zum gegenseitigen Verbinden aufweisen.

Die Verwendung von Schichten sowohl für die Abstandselemente als auch für die Filterlagen bietet die Möglichkeit, alle Schichten aufeinanderzustapeln, ohne daß beispielsweise Stützrohre notwendig sind, wie dies bei Filterzellen der Fall ist. Darüber hinaus gibt es die Möglichkeit, beliebige Filterschichten in beliebiger Reihenfolge aufeinanderzustapeln.

Ein wesentlicher Vorteil ist darin zu sehen, daß es nicht notwendig ist, zwei oder mehr Schichten durch aufwendige Verfahren zu umspritzen. Die Schichten werden mit ihren Abdichtungen lediglich aufeinandergestapelt, und sofort oder später vor Gebrauch für den betriebsbereiten Zustand verpreßt.

Das Tiefenfiltermaterial weist organische und/oder anorganische, faserige und/oder körnige Stoffe auf. Als Basismaterial für Filterschichten werden Zellulose oder Kunststofffasern verwendet, in die beispielsweise Kieselgur, Perlite oder Metalloxide oder andere filtrationsaktive Substanzen eingelagert werden können. Hierbei dienen Kieselgure und Perlite zur Vergrößerung der inneren Oberfläche und damit zur Vergrößerung des Trubaufnahmevermögens.

Die Filterschichten und die drainierenden Schichten sind vorzugsweise planar.

Vorzugsweise sind mindestens zwei Filterschichten unterschiedlichen Abscheidegrades aufeinandergelegt, wodurch sich so auf einfache Weise ein Stufenfilter herstellen läßt. Die letzte Filterschicht einer solchen Filterschichtanordnung kann beispielsweise als Entkeimungsschicht ausgebildet sein.

Es besteht auch die Möglichkeit, mindestens zwei Filterschichten mit demselben Abscheidegrad aufeinanderzulegen. Dies ist insbesondere dann von Vorteil, wenn es sich um adsorptiv wirkende Filterschichten handelt, weil dann die Durchtrittsstrecke für das Unfiltrat in beliebiger Weise vergrößert werden kann, so daß sich die adsorptive Wirkung des Filtermaterials besser entfalten kann.

Gemäß einer weiteren Ausführungsform können in die Filterschichten unterschiedlich absorptiv wirkende Materialien eingearbeitet sein. Dies bedeutet, daß die unterschiedlichen Materialien in unterschiedlichen Filterschichten vorhanden sein können, bzw. daß diese unterschiedlichen Materialien auch in einer Filterschicht kombiniert sein können. Derartige Filterschichten können auch mit Filterschichten kombiniert sein, die von adsorptiv wirkenden Materialien frei sind.

Die Abdichtung der drainierenden Schichten zum Filtrat bzw. Unfiltrat erfolgt vorzugsweise durch geeignete Dichtelemente. Diese Dichtelemente, die für jede Schicht einzeln vorgesehen sein können, weisen vorzugsweise dieselbe Dicke auf wie die entsprechende drainierende Schicht.

Auch die Filterschichten müssen entsprechende zum Filtratraum weisende Dichtelemente aufweisen, wobei bei einer Anordnung von Filterschichten mit unterschiedlicher Durchlässigkeit und/oder Abscheidegrade die dichteste Schicht, d.h. die Schicht mit dem höchsten Abscheidegrad bzw. geringsten Durchlässigkeit kein Dichtelement aufweisen darf.

Vorzugsweise bestehen die Dichtelemente aus Formteilen, wie z.B. Kunststoffrahmen, die zusammen mit den Schichten zur Bildung des Filtermoduls eingelegt werden.

Je nach Ausgestaltung des Filtermoduls, d.h. der Anordnung von Filterschichten und drainierenden Schichten können auch mehrere Dichtelemente aufeinandergestapelt sein, wenn sie leckdicht miteinander verbunden sind.

Vorzugsweise können mehrere aneinandergrenzende Dichtelemente einteilig ausgestaltet sein, was die Herstellung weiter vereinfacht.

Vorzugsweise weisen die Dichtelemente an ihren Stirnseiten zusätzliche Strukturen auf, die in die benachbarte Schicht eingreifen können, um insbesondere den Anpreßdruck zu erhöhen. Solche Strukturen können Vorsprünge, Ringe, Noppen oder dergleichen sein.

Das Material für die drainierende Schicht kann beispielsweise ein Kunststoffvlies sein. Solche Materialien würden bei dem erfindungsgemäßen Aufbau derart stark komprimiert werden, wenn außer den Dichtelementen nicht noch Durchflußelemente am jeweils anderen Übergang zum Unfiltrat- bzw. Filtratraum vorgesehen wären, die ein Zusammendrücken des drainierenden Materials verhindern. Hierfür sind solche Durchflußelemente von Vorteil, die aus einem massiven Rahmen bestehen, der in der Ebene der drainierenden Schicht liegende Bohrungen, Nuten oder andere Durchflußöffnungen aufweist.

Vorzugsweise sind die drainierende Schicht mit Dichtelement und/oder Durchflußelement einteilig ausgeführt. Es wird dadurch möglich, kostengünstige Bauteile zu fertigen, die lediglich mit den Filterschichten kombiniert und zusammengefügt werden brauchen.

Vorzugsweise sind die Dichtelemente und/oder Durchflußelemente mit Mitteln zum gegenseitigen Verbinden versehen. Die Verbindungsmittel sind vorzugsweise leicht lösbar ausgebildet, damit die Modulbauteile leicht voneinander getrennt werden können.

Diese Verbindungsmittel können Clipse und Rastnasen umfassen.

Das erfindungsgemäße Filtermodul bietet den Vorteil, daß die Schichten beliebige Geometrien aufweisen können. Bevorzugt sind runde oder rechteckige Schichten.

Ferner können die Schichten bzw. das Modul mehrere Filtrat-/Unfiltratkanäle aufweisen, die nicht mittig angeordnet sein müssen.

Die Herstellkosten des erfindungsgemäßen Moduls sind deutlich niedriger als bei solchen Modulen, die aus Filterzellen aufgebaut sind. Auch die Entsorgung läßt sich deutlich verbessern. Es brauchen lediglich die drainierenden Schichten von den Filterschichten getrennt zu werden. Wenn die Schichten über beispielsweise Clipse miteinander verbunden sind, brauchen lediglich diese Clipse durchtrennt werden und das gesamte Modul zerfällt in seine Einzelschichten. Die Kunststoffteile und die Filterschichten können jeweils getrennt entsorgt werden. Im Gegensatz zu Filterzellen, die erst mühsam aufgetrennt werden müßten, um die Einzelbestandteile zu entsorgen, wird bei dem erfindungsgemäßen Modul eine erhebliche Vereinfachung erzielt.

Weitere Vorteile bestehen darin, daß die Filtermodule in beiden Flußrichtungen betrieben werden können, d.h. Filtrat- und Unfiltratraum können vertauscht werden. Darüber hinaus sind die Filtermodule rückspülbar.

Beispielhafte Ausführungsformen werden nachfolgend anhand der Zeichnungen näher erläutert.

Es zeigen:
- Figur 1: einen Vertikalschnitt durch ein Filtermodul,
- Figur 2a-c: Detaildarstellungen einer drainierenden Schicht,
- Figur 3: einen Schnitt durch eine drainierende Schicht gemäß einer weiteren Ausführungsform,
- Figur 4: einen Vertikalschnitt durch ein Filtermodul gemäß einer weiteren Ausführungsform,
- Figuren 5a und 5b: Draufsicht und Schnitt durch eine drainierende Schicht gemäß einer weiteren Ausführungsform,
- Figur 5c: einen Schnitt durch eine Riffelplatte,
- Figur 6: einen Teilschnitt durch ein Filtermodul zur Veranschaulichung der Verbindungsmittel.

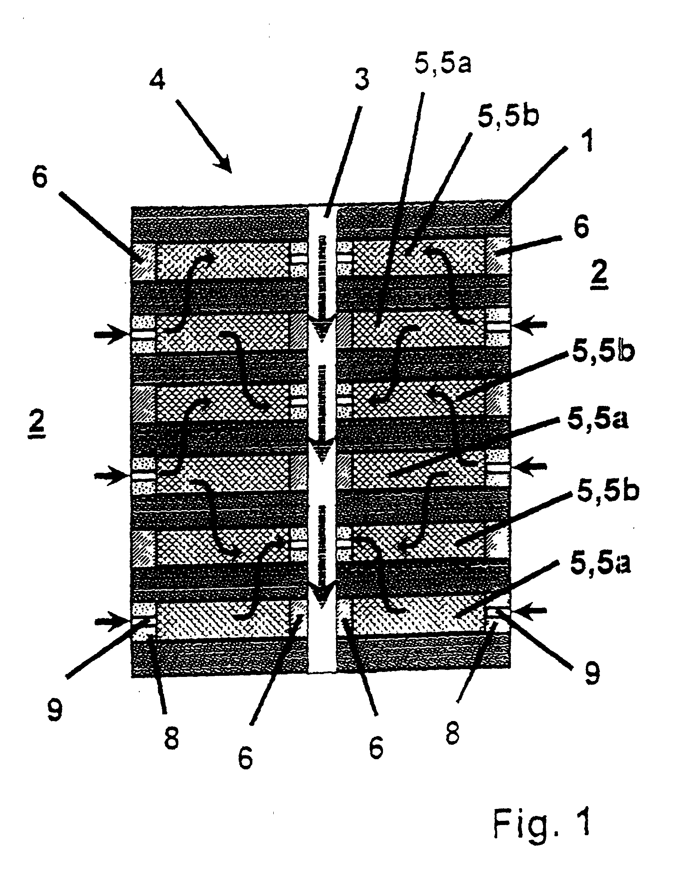

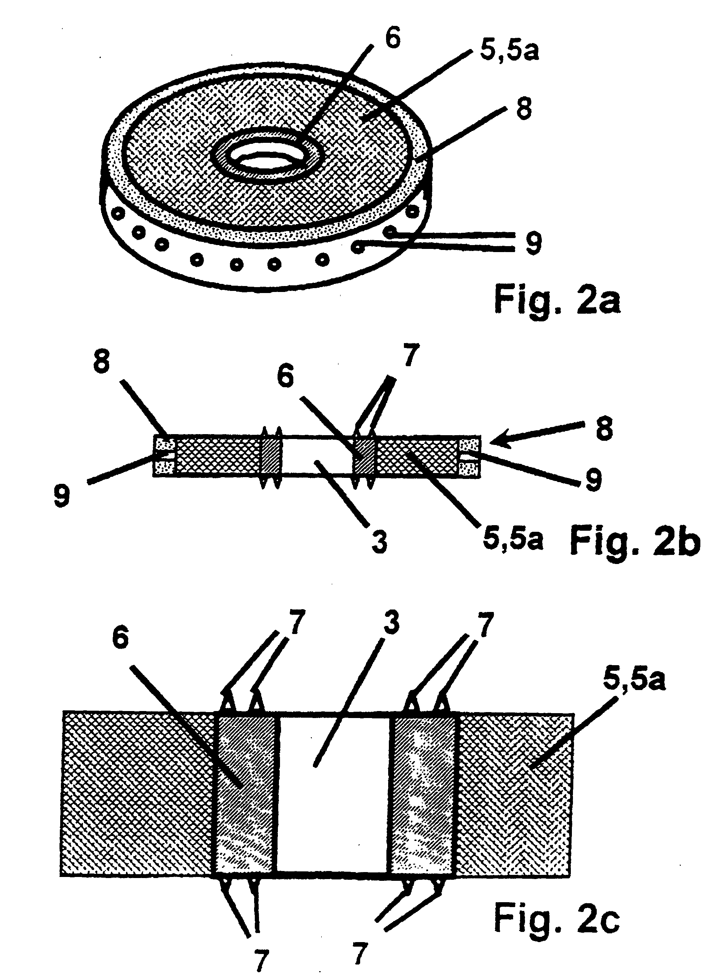

In der Figur 1 ist ein Vertikalschnitt durch ein Filtermodul 4 dargestellt. Das Filtermodul besteht aus Filterschichten 1, die sich mit drainierenden Schichten 5 abwechseln. Für die Geometrie von Filterschichten 1 und drainierenden Schichten 5 kann beispielsweise eine runde Gestalt gewählt werden, wie dies aus den Figuren 2a - c hervorgeht. Das Filtermodul 4 ist vom Unfiltratraum 2 umgeben und besitzt im Zentrum einen Filtratraum 3 in Form eines Kanals. Dementsprechend weisen sowohl die Filterschichten 1 als auch die drainierenden Schichten 5 eine zentrale Bohrung auf. Die Flußrichtung von Filtrat und Unfiltrat wird durch Pfeile gekennzeichnet.

In der in der Figur 1 gezeigten Ausführungsform wechselt jeweils eine Filterschicht 1 mit einer drainierenden Schicht 5 ab. Die drainierenden Schichten 5 unterteilen sich in Unfiltrat führende Schichten 5a und Filtrat führende Schichten 5b. Die Unfiltrat führende Schicht ist zum Filtratraum 3 hin durch ein Dichtelement 6 abgedichtet. Aufgrund der hier vorliegenden Geometrie handelt es sich um ringförmige Dichtelemente 6. Bei den Filtrat führenden drainierenden Schichten 5b ist der Durchgang zum Filtratraum 3 offen. Diese Schichten sind gegenüber dem Unfiltratraum 2 ebenfalls durch entsprechende Dichtelemente 6 abgedichtet. Jede drainierende Schicht weist somit ein eigenes Dichtelement auf, das dieselbe Dicke besitzt wie die Schicht.

Am gegenüberliegenden Übergang zum Filtrat- bzw. Unfiltratraum weisen die drainierenden Schichten 5a,5b jeweils ein Durchflußelement 8 auf, das dieselbe Dicke wie die Schicht besitzt und Durchflußbohrungen 9 aufweist. Das Filtermodul 4, das, wie im Zusammenhang mit der Fig. 7 beschrieben wird, zusammengedrückt wird, bleibt durch die Durchfluß- und Dichtelemente formbeständig und die drainierenden Schichten 5a,5b können ihre Aufgabe erfüllen.

In der Figur 2a ist eine drainierende Schicht 5, 5a perspektivisch dargestellt. Die Figur 2b zeigt einen Schnitt durch eine solche Schicht, wobei die den Randbereich bildenden Durchflußelemente 8 deutlicher zu sehen sind. Es handelt sich hierbei um einen Durchflußring aus einem massiven Kunststoffmaterial, der in der Ebene der drainierenden Schicht 5, 5a mit Durchgangsbohrungen 9 versehen ist. Dieser Durchflußring 8 verhindert zusammen mit dem ebenfalls aus massivem Material bestehenden Dichtelement 6, daß beim Zusammenbau und im Betrieb des Filtermoduls die drainierende Schicht 5 zusammengedrückt wird. Es muß gewährleistet sein, daß die drainierende Schicht ungehindert das Unfiltrat durchläßt und zu dem Filtermaterial, d.h. zu den angrenzenden Filterschichten leitet.

In der Figur 2c ist der mittlere Teil der drainierenden Schicht 5, 5a vergrößert dargestellt, so daß an den Stirnseiten des Dichtelementes 6 die Strukturen in Form von spitzen Vorsprüngen 7 deutlich zu sehen ist.

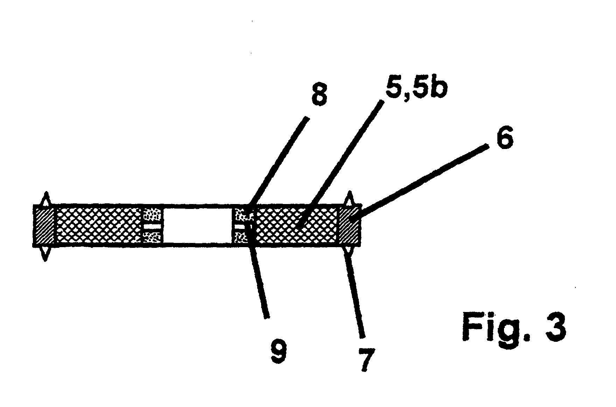

Die drainierende Schicht 5a, das Dichtelement 6 und das Durchflußelement 8 können einzelne Bauteile sein. Es ist jedoch von Vorteil, wenn die drainierende Schicht 5a, das Dichtelement 6 und das Durchflußelement 8 aus einem Teil bestehen, weil dadurch die Herstellungskosten deutlich gesenkt werden können. In der Figur 3 ist ein Schnitt durch ein drainierendes Element 5b dargestellt, das Filtrat führt. Im Gegensatz zu der in der Figur 2b dargestellten drainierenden Schicht ist die Anordnung von Dichtelement 6 und Durchflußelement 8 vertauscht.

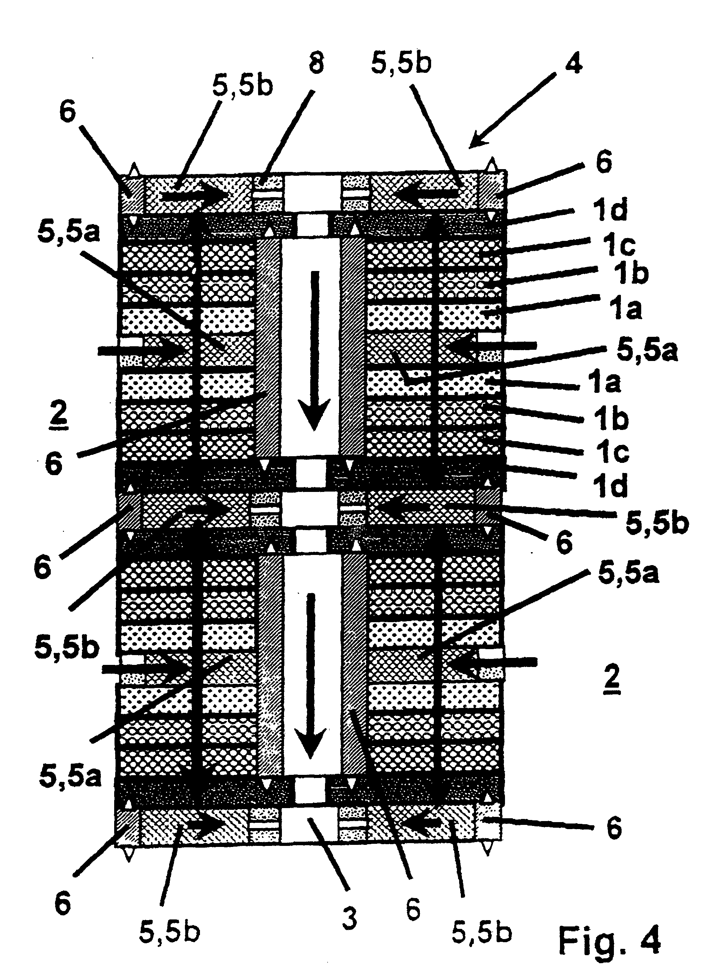

In der Figur 4 ist eine weitere Ausführungsform eines Filtermoduls 4 dargestellt. Zwischen zwei drainierenden Schichten 5a, 5b sind mehrere Filterschichten 1a - 1d angeordnet. Diese Filterschichten 1a - ld weisen einen in Strömungsrichtung gesehen, ansteigenden Abscheidegrad auf, wobei beispielsweise die Schicht 1d eine Entkeimungsschicht sein kann. Die Entkeimungsschicht 1d ist unmittelbar vor der drainierenden Schicht 5b für das Filtrat angeordnet und weist einen besonders hohen Abscheidegrad auf. Hierdurch wird das Unfiltrat stufenweise gefiltert und damit eine besonders hohe Standzeit des Filtermoduls gewährleistet. Die Filterschichten 1a - 1c weisen bei dieser Ausführungsform, ebenso wie die Unfiltrat führende drainierende Schicht 5a, zu dem Filtratraum 3 Dichtelemente 6 auf. Da die Dichtelemente der genannten Schichten aneinandergrenzen, kann ein einteiliges Element in Form eines Dichtrohres Verwendung finden. Da die Entkeimungsschicht 1d diejenige Schicht mit dem höchsten Abscheidegrad ist, wird unmittelbar zum Filtratraum 3 strömendes Unfiltrat ausreichend gereinigt und benötigt daher kein Dichtelement.

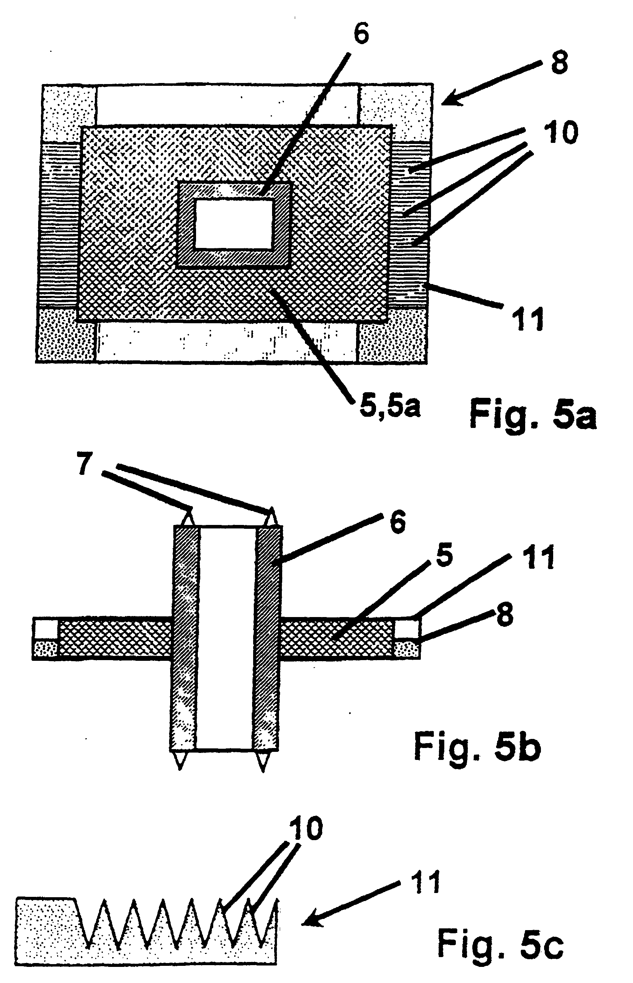

In der Figur 5a ist eine drainierende Schicht 5 in Draufsicht und in Figur 5b im Schnitt dargestellt. Es handelt sich hierbei um eine rechteckige Geometrie. Das Dichtelement 6 ist ein Vierkantrohr, das sich zur Abdichtung der darüber und darunter angeordneten Filterschichten (die in der Figur 5b nicht dargestellt sind), sich über die drainierende Schicht 5 nach oben und nach unten erstreckt. Das Durchgußelement 8 besteht aus einem massiven Kunststoffring, auf dessen Oberseite eine Riffelplatte 9 integriert ist, die in der Ebene der drainierende Schicht 5 verlaufende Nuten 10 aufweist. Das Durchflußelement kann an der Unterseite stattdessen oder zusätzlich eine Riffelplatte aufweisen. Eine Detaildarstellung der Riffelplatte 11 ist in der Figur 5c dargestellt.

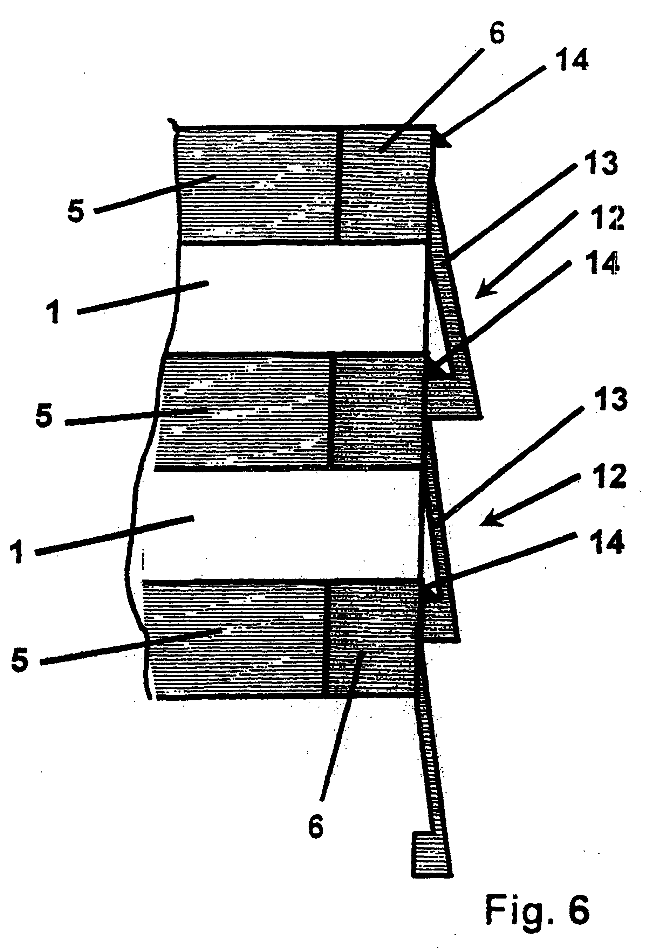

In der Figur 6 ist ein Ausschnitt aus einem Filtermodul dargestellt, bei dem die Dichtelemente 6 jeweils Verbindungsmittel 12 aufweisen, die aus einem Clips 13 und einer entsprechenden Rastnase 14 bestehen. Die Rastnasen 14 sind an der radialen Außenseite der Dichtelemente 6 ebenso angeformt wie die Clipse 13.

Wenn die Schichten 1 und 5 aufeinandergestapelt werden, können die Clipse an den Rastnasen einrasten und somit das gesamte Modul fixieren.

### Bezugszeichen:

- 1: Filterschicht
- 1a-d: Filterschicht
- 2: Unfiltratraum
- 3: Filtratraum
- 4: Filtermodul
- 5: drainierende Schicht
- 5a: Unfiltrat führende drainierende Schicht
- 5b: Filtrat führende drainierende Schicht
- 6: Dichtelement
- 7: Fixiermittel
- 8: Durchflußelement
- 9: Bohrung
- 10: Nut
- 11: Riffelplatte
- 12: Verbindungsmittel
- 13: Clips
- 14: Rastnase
- 31: Filtereinrichtung
- 33, 34: Endplatte
- 35: Unfiltratraum
- 36: Filtratraum
- 37: Stutzen
- 38: Seitenwand
- 39: Stutzen

## Patentansprüche

1. Filtermodul mit Lagen aus Filterschichten (1,1a-d) aus Tiefenfiltermaterial, zwischen denen Abstandselemente aus drainierenden Schichten (5,5a,5b) angeordnet sind, wobei die drainierenden Schichten (5,5a,5b) und die Filterschichten (1,1a-d) spaltfrei aufeinander gestapelt sind, und die drainierenden Schichten (5,5a,5b) wechselseitig zum Filtrat/Unfiltratraum mittels Dichtelementen (6) abgedichtet sind, **dadurch gekennzeichnet,**
**daß** die drainierenden Schichten (5,5a,5b) am jeweils anderen Übergang zum Unfiltrat-/Filtratraum Durchflußelemente (8) aufweisen, und
**daß** die Dichtelemente (6) und/oder die Durchflußelemente (8) Mittel (12) zum gegenseitigen Verbinden aufweisen.

2. Filtermodul nach Anspruch 1, **dadurch gekennzeichnet, daß** mindestens zwei Filterschichten (1, 1a - d) unterschiedlicher Abscheidegrade aufeinanderliegen.

3. Filtermodul nach Anspruch 1, **dadurch gekennzeichnet, daß** mindestens zwei Filterschichten (1, 1a - 1d) mit demselben Abscheidegrad aufeinanderliegen.

4. Filtermodul nach einem der Ansprüche 1 bis 3, **dadurch gekennzeichnet, daß** die Filterschichten (1, 1a - d) adsorptiv wirkende Filterschichten sind.

5. Filtermodul nach einem der Ansprüche 1 bis 4, **dadurch gekennzeichnet, daß** in die Filterschichten (1, 1a - d) unterschiedlich adsorptiv wirkende Materialien eingearbeitet sind.

6. Filtermodul nach einem der Ansprüche 1 bis 5, **dadurch gekennzeichnet,**
**daß** die Filterschichten (1, 1a - c) zum Filtratraum (3) weisende Dichtelemente (6) aufweisen.

7. Filtermodul nach einem der Ansprüche 1 bis 6, **dadurch gekennzeichnet, daß** die Dichtelemente (6) Formteile sind.

8. Filtermodul nach einem der Ansprüche 1 bis 7, **dadurch gekennzeichnet, daß** mehrere aneinandergrenzende Dichtelemente (6) einteilig ausgestaltet oder leckdicht miteinander verbunden sind.

9. Filtermodul nach einem der Ansprüche 1 bis 8, **dadurch gekennzeichnet, daß** die Dichtelemente (6) an ihren Stirnseiten Strukturen (7) aufweisen, die in die jeweils benachbarte Schicht eingreifen.

10. Filtermodul nach einem der Ansprüche 1 bis 9, **dadurch gekennzeichnet, daß** die Durchflußelemente (8) einen massiven Rahmen mit in der Ebene der drainierenden Schicht (5,5a,5b) liegenden Bohrungen (9) oder Nuten (10) umfassen.

11. Filtermodul nach einem der Ansprüche 1 bis 10, **dadurch gekennzeichnet, daß** die drainierende Schicht (5,5a,5b) ein Kunststonvlies aufweist.

12. Filtermodul nach einem der Ansprüche 1 bis 11, **dadurch gekennzeichnet, daß** die drainierende Schicht (5,5a,5b) mit Dichtelement (6) und Durchflußelement (8) einteilig ausgeführt ist.

13. Filtermodul nach einem der Ansprüche 1 bis 12, **dadurch gekennzeichnet, daß** diese Verbindungsmittel Clipse (13) und Rastnasen (14) umfassen.

14. Filtermodul nach einem der Ansprüche 1 bis 13, **dadurch gekennzeichnet, daß** die Filterschichten und die drainierenden Schichten (5,5a,5b) planar sind.

## Claims

1. Filter module having layers consisting of filter layers (1, 1a-d) of deep-bed filter material, between which spacer elements consisting of draining layers (5, 5a, 5b) are arranged, the draining layers (5, 5a, 5b) and the filter layers (1, 1a-d) being stacked on top of one another without a gap, and the draining layers (5, 5a, 5b) being sealed with respect to the filtrate/unfiltered material space by means of sealing elements (6) on alternate sides, **characterised in that**
the draining layers (5, 5a, 5b) have flow elements (8) at the respective other transition to the unfiltered material/filtrate space, and
the sealing elements (6) and/or the flow elements (8) have means (12) for mutual connection.

2. Filter module according to claim 1, **characterised in that** at least two filter layers (1, 1a-d) with different degrees of separation lie on top of one another.

3. Filter module according to claim 1, **characterised in that** at least two filter layers (I, 1a-d) with the same degree of separation lie on top of one another.

4. Filter module according to any one of claims 1 to 3, **characterised in that** the filter layers (1, 1a-d) are filter layers having an adsorptive action.

5. Filter module according to any one of claims 1 to 4, **characterised in that** materials having a differing adsorptive action are incorporated in the filter layers (1, la-d).

6. Filter module according to any one of claims 1 to 5, **characterised in that** the filter layers (1, 1a-c) have sealing elements (6) towards the filtrate space (3).

7. Filter module according to any one of claims 1 to 6, **characterised in that** the sealing elements (6) are moulded articles.

8. Filter module according to any one of claims 1 to 7, **characterised in that** a plurality of adjacent sealing elements (6) are formed in one piece or are joined to one another in a leakproof manner.

9. Filter module according to any one of claims 1 to 8, **characterised in that** the sealing elements (6) have, on their end faces, structures (7) which engage in the respectively adjacent layer.

10. Filter module according to any one of claims 1 to 9, **characterised in that** the flow elements (8) comprise a solid frame with bores (9) or grooves (10) which lie in the plane of the draining layer (5, 5a, 5b).

11. Filter module according to any one of claims 1 to 10, **characterised in that** the draining layer (5, 5a, 5b) has a plastics nonwoven.

12. Filter module according to any one of claims 1 to 11, **characterised in that** the draining layer (5, 5a, 5b) is made in one piece with the sealing element (6) and the flow element (8).

13. Filter module according to any one of claims 1 to 12, **characterised in that** these connection means comprise clips (13) and catch projections (14).

14. Filter module according to any one of claims 1 to 13, **characterised in that** the filter layers and the draining layers (5, 5a, 5b) are planar.

## Revendications

1. Module de filtrage comprenant des couches formées par des couches filtrantes (1, 1a-d), réalisées dans un matériau pour filtre à lit profond, entre lesquelles sont agencés des éléments d'écartement formés par des couches de drainage (5, 5a, 5b), les couches de drainage (5, 5a, 5b) et les couches filtrantes (1, 1a-d) étant empilées sans interstice les unes sur les autres et les couches de drainage (5, 5a, 5b) étant rendues étanches de manière alternée par rapport au compartiment du filtrat/fluide non filtré au moyen d'éléments d'étanchéité (6), **caractérisé en ce que** les couches de drainage (5, 5a, 5b) comportent des éléments de passage (8) respectivement dans l'autre zone de transition vers le compartiment de fluide non filtré/filtrat, et **en ce que** les éléments d'étanchéité (6) et/ou les éléments de passage (8) comportent des moyens (12) pour un assemblage réciproque.

2. Module de filtrage selon la revendication 1, **caractérisé en ce qu'**au moins deux couches filtrantes (1, 1a-d) avec des degrés de filtration différents sont superposées.

3. Module de filtrage selon la revendication 1, **caractérisé en ce qu'**au moins deux couches filtrantes (1, 1a-d) avec le même degré de filtration sont superposées.

4. Module de filtrage selon l'une quelconque des revendications 1 à 3, **caractérisé en ce que** les couches filtrantes (1, 1a-d) sont des couches filtrantes à action adsorbante.

5. Module de filtrage selon l'une quelconque des revendications 1 à 4, **caractérisé en ce que** des matériaux à action adsorbante différente sont insérés dans les couches filtrantes (1, 1a-d).

6. Module de filtrage selon l'une quelconque des revendications 1 à 5, **caractérisé en ce que** les couches filtrantes (1, 1a-c) orientées vers le compartiment du filtrat (3) sont munies d'éléments d'étanchéité (6).

7. Module de filtrage selon l'une quelconque des revendications 1 à 6, **caractérisé en ce que** les éléments d'étanchéité (6) sont des pièces moulées.

8. Module de filtrage selon l'une quelconque des revendications 1 à 7, **caractérisé en ce que** plusieurs éléments d'étanchéité (6) adjacents sont conçus d'une seule pièce ou sont assemblés les uns aux autres sans fuite.

9. Module de filtrage selon l'une quelconque des revendications 1 à 8, **caractérisé en ce que** les éléments d'étanchéité (6) comportent sur leurs faces frontales des structures (7) qui entrent en prise dans la couche respectivement voisine.

10. Module de filtrage selon l'une quelconque des revendications 1 à 9, **caractérisé en ce que** les éléments de passage (8) comportent un cadre massif avec des forures (9) ou des rainures (10) situées dans le plan de la couche de drainage (5, 5a, 5b).

11. Module de filtrage selon l'une quelconque des revendications 1 à 10, **caractérisé en ce que** la couche de drainage (5, 5a, 5b) comporte un non-tissé en matière plastique.

12. Module de filtrage selon l'une quelconque des revendications 1 à 11, **caractérisé en ce que** la couche de drainage (5, 5a, 5b) est conçue d'une seule pièce avec des éléments d'étanchéité (6) et des éléments de passage (8).

13. Module de filtrage selon l'une quelconque des revendications 1 à 12, **caractérisé en ce que** ces moyens d'assemblage comportent des clips (13) et des tétons de blocage (14).

14. Module de filtrage selon l'une quelconque des revendications 1 à 13, **caractérisé en ce que** les couches filtrantes et les couches de drainage (5, 5a, 5b) sont planes.
